# EUROPEAN PATENT APPLICATION

(11) **EP 1 361 372 A2**
(43) Date of publication of application: **12.11.2003**
(21) Application number: 03252708.7
(22) Date of filing: 29.04.2003
(51) Int. Cl.: F16C 13/00, F16C 21/00, F16C 33/78, F16H 53/06

(54) **Stud-type roller bearing with tracking roller**

(30) Priority: 07.05.2002 JP 2002131585
(71) Applicant: Nippon Thompson Co., Ltd., Minato-ku, Tokyo (JP)
(72) Inventor: Ogawa, Yoshitaka, c/o Nippon Thompson Co., Ltd., Mino-shi, Gifu-ken 501-3763 (JP)
(74) Representative: Jenkins, Peter David

(57) **Abstract**

A stud-type roller bearing with tracking roller, in which a thrust washer(7) together with a sealing member(5) fits effectively in a space limited to get the bearing in itself shrunk in size. With the stud-type roller bearing with tracking roller disclosed here, an outer ring(2) is made at axially opposite ends (36) thereof with circular setbacks(9), one to each end, which are larger in their inside diameters than a circular raceway surface(17). Any one of the setbacks (9) is arranged in opposition to the flange(8) of the shaft(1) while the other is placed in opposition relation to a cover plate(6) that fits on the shaft(1) at a location adjacent to the raceway surface(15) around the shaft(1). Circular recesses(18) are cut in the setbacks(9) to hold a laminate of the thrust washer (7) and the elastic sealing member(5) together with the thrust washer(7) therein.

## Description

The present invention relates to a roller bearing of stud type for a tracking roller, sometimes called stud-type roller bearing with tracking roller hereinafter, in which a stud fits for free rotation in an outer ring through more than one roller interposed between them.

Conventionally, a roller bearing of stud type for a tracking roller as disclosed in, for example Japanese Utility Model Registration No. 2513158 has been known, in which a shaft having axially opposite ends, any one of which is made with a flange or a head while the other with an external thread, fits in an outer ring for rotation relative to one another through more than one roller interposed between them.

With the roller bearing of stud type for a tracking roller as stated earlier, the outer ring has axially opposite ends that are made even entirely and flanked with thrust washers, one to each end, spreading throughout nearly allover ends. The prior stud-type roller bearing with tracking roller is generally comprised of an outer ring made thick in radial direction and having a preselected axial dimension, a flange and a cover plate both made just less in diameter than the outer ring, and thrust washers of annular disc interposed for rotation between any one of the axial opposite ends of the outer ring and the flange and also between the other end of the outer ring and the cover plate, respectively. The thrust washer is made of a thin circular sheet that is not more than the flange in diameter. The stud-type roller bearing with tracking roller constructed as stated earlier uses the self-lubricating thrust washer that helps make face-to-face contact area larger, resulting in the reduction of thrust load per unit area, thereby lowering the coefficient of sliding friction. This eventually provides the bearing less in the coefficient of friction and thus less subject to binding between parts.

Japanese Utility Model Laid-Open No. 47417/1990 discloses a cam follower bearing with thrust washer, equivalent to the stud-type roller bearing with tracking roller, in which the thrust washers are arranged for rotation between the axially opposite ends of the outer ring thick in radial dimension and the associated flanges of the shaft or inner ring. The thrust washer has many dents in the sides thereof and is coated with a thin skin of material rich in affinity with metals.

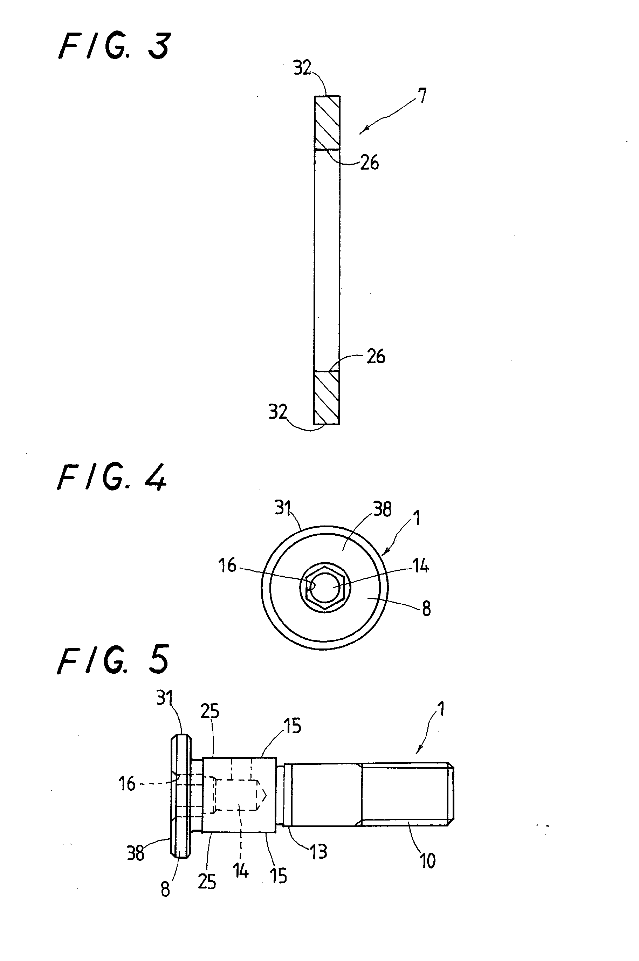

In another Japanese Utility Model Laid-Open No. 98350/1982 there is disclosed a cam follower or a roller follower, in which an outer ring, as shown in FIGS. 3 and 4, has axially opposite ends, each of which is partially cut away at radially inside circular area thereof to make an axially setback and a radially circular setback, on which a sealing member made up of a metal backing plate and a rubber adheres integrally. The cam follower or the roller follower, moreover, has thrust washers, each of which is placed for rotation between the exposed side of the metal backing plate and the associated side of the flange or flange ring in axially loose manner leaving clearances the axially opposite sides of the thrust washer and the mating surfaces of the metal backing plate and the flange, one to each side, so as to allow the thrust washers to turn with wobbly with being introduced along a circular inside guide of the rubber seal.

The prior stud-type roller bearings with tracking roller as recited above, however, have needed installing sealing members to close circumferential clearance left open between the outer ring and any of the cover plate and the flange, thereby improving the sealing performance. Moreover, since the sealing members have had to be laid along the clearances left open around of the cover plate and the flange of the stud or the shaft, it has proved tough to place properly the sealing members in a way surrounding the peripheries of the cover plate and the flange of the stud, especially when both the flange and the cover plate are limited in axial width around the periphery thereof. With the stud-type roller bearing with tracking roller, the thrust washers as shown in FIG. 3 of the reference cited earlier are each interposed between the cover plate or the flange of the shaft and either of the axially setbacks made on the axially opposite ends of the outer ring. This construction having the setbacks at the axially opposite ends of the tracking roller, although but helping keep foreign matter from entering inside the roller bearing, still poses some difficult problems in sealing effect because there is no sealing member lying at the setbacks. Generally, the roller bearings are in need of any sealing member of elastic material including synthetic rubbers, synthetic resins or the like to, for example keep lubricant against escape from the inside to the outside of the bearings while foreign matter from entering inside the bearings.

Moreover, some thrust washers with sealing means have been conventionally used in the stud-type roller bearing with tracking roller. Nevertheless, the sealing means, because of made of a rubber material joined integrally together with a metal backing plate, is too bulky in itself in size. Thus, the prior thrust washers with sealing means of the rubber material joined with the metal backing plate, although suitable to use them in the large roller bearings affording comparatively in space to receive the sealing means therein, still remain a major challenge for the stud-type roller bearing with tracking roller, which is too small in size to reserve the space enough to accommodate the sealing means therein.

Current development in advanced technology needs to more shrink the stud-type roller bearing with tracking roller down in dimension. To tackle the demand, there still remain major problems to be overcome about how to fit a sealing member in the stud-type roller bearing with tracking roller while getting matching with installation of the thrust washer.

Meanwhile, the stud-type roller bearing with tracking roller is generally comprised of a shaft, generally called a stud, having a flange at one of forward and aft ends thereof and an external thread around the other end, and an outer ring fit for free rotation over the shaft through more than one roller interposed between them, and used in such a way that the shaft is fastened to, for example a base while outer ring turns to lead parts such as works and the like along the periphery of the outer ring. The stud-type roller bearing with tracking roller discussed here can be used in a way lying side by side with spaced apart away from one another at a preselected interval along the traveling direction of the parts, works and so on to guide the parts, works and so on linearly and/or curvilinearly. Advanced machinery used in fields as diverse as semiconductor manufacturing equipments and so on requires more and more the stud-type roller bearing with tracking roller, which can manage growing demands for the use in high revolution, even with less damage and long-lasting service life.

To deal with the demands stated earlier, the stud-type roller bearing with tracking roller, even made shrunk in size, has indispensably any thrust washers therein, which serve to keep the outer ring against coming into contact at any one of the axially opposite ends thereof and at the other end with any associated one of the flange on the shaft and the cover plate after any axial load has happened in the roller bearing while on a revolution of the outer ring. In addition, the stud-type roller bearing with tracking roller also needs to have the sealing member installed therein to keep lubricant against escape from the inside to the outside of the bearings while foreign matter from entering inside the bearings.

The present invention, therefore, has as its primary aim to overcome the problems as described just above and more particular to provide an improved stud-type roller bearing with tracking roller, in which a shaft having axially opposite ends, any one of which is made with a flange while the other with an external thread, fits in an outer ring for rotation relative to one another through more than one roller interposed between them, and wherein a sealing member fits between the shaft and the outer ring to raise sealing effect between them while a thrust washer also lies between the shaft and the outer ring to lower wear that might otherwise occur under any axial load. With the stud-type roller bearing with tracking roller according to the present invention, especially, the sealing member of elastic substance is made so close contact with the thrust washer as to get the sealing member reinforced with the thrust washer, making it possible to build the thrust washer together with the sealing member in a limited space, thereby providing the stud-type roller bearing with tracking roller, which is superior in dust-proofing and made ready to use in small machines.

The present invention is concerned with a stud-type roller bearing with tracking roller; comprising a circular outer ring having a first circular raceway surface over an inside surface thereof, a shaft fit in the outer ring for rotation, the shaft being made at any one of forward and aft ends thereof with a flange while at the other end with a thread, and provided around an outside surface thereof with a second circular raceway surface confronting the first raceway surface, and more than one roller disposed between the first raceway surface and the second raceway surface to roll through a load raceway circuit; wherein the outer ring is made at axially opposite ends thereof with circular setbacks, one to each end, which are larger in their inside diameters than the first circular raceway surface, and any one of the setbacks is arranged in opposition to the flange of the shaft while the other is placed in opposition relation to a cover plate that fits on the shaft at a location adjacent to the second raceway surface around the shaft; and wherein the setbacks are each made with a circular recess where a laminate of a thrust washer and an elastic sealing member joined together with the thrust washer fits therein.

In one aspect of the present invention, there is provided a stud-type roller bearing with tracking roller, in which the cover plate fits in a circular groove around the shaft, which is cut at a location next to the second raceway surface on the shaft. In another aspect of the present invention, there is provided a stud-type roller bearing with tracking roller, in which the roller is held in a retainer having more than one pocket that are spaced circumferentially at regular intervals around the retainer. In a further aspect of the present invention, there is provided a stud-type roller bearing with tracking roller in which the thrust washer fits in the circular recess with being situated nearer to the first raceway surface than the sealing member in such a way that a circular inside surface of the thrust washer is in opposition to a circular periphery of the retainer.

In another aspect of the present invention, there is provided a stud-type roller bearing with tracking roller, in which one of the axially opposite sealing members has a circular lip extending radially inwards out of the sealing member into abutment against a circular periphery of the flange, thereby closing a circular clearance left between the circular periphery of the flange and a circular inside surface in the associated setback, while the other sealing member has a circular lip extending radially inwards out of the sealing member into abutment against a circular periphery of the cover plate, thereby closing a circular clearance left between the circular periphery of the cover plate and a circular inside surface in the associated setback.

In another aspect of the present invention, there is provided a stud-type roller bearing with tracking roller, in which the thrust washer is made of a thermoplastic synthetic resin including polyether ether ketone and so on much subject to elastic deformation, which is rich in wear-resisting property as well as in mechanical strength, and also less subjected to deformation, and wherein the thrust washer is formed into a circular disc of rectangle in cross section. In a further aspect of the present invention, there is provided a stud-type roller bearing with tracking roller, in which the sealing member is made of elastically deformable synthetic resin including polypropylene and so on.

In another aspect of the present invention, there is provided a stud-type roller bearing with tracking roller, in which the outer ring is made as radially thin as possible, providing there is reserved a desired thickness between the circular periphery of the outer ring and the bottom of the circular recess. In a further aspect of the present invention, there is a stud-type roller bearing with tracking roller, in which the sealing member has an outside periphery that is chamfered along axially circular edges thereof to render the sealing member easier to fit in the recess cut in the outer ring.

In another aspect of the present invention, there is provided a stud-type roller bearing with tracking roller, in which the flange integral with lengthwise one end of the shaft comes into face-to-face engagement with one circular side of the retainer, while the cover plate held in the circular groove around the shaft comes into face-to-face engagement with the other circular side of the retainer, so that the retainer is held in place between the flange and the cover plate. In a further aspect of the present invention, there is provided a stud-type roller bearing with tracking roller, wherein the flange of the shaft is made on an end face thereof with a hole that fits on any fastening bolt, and also an oiling passage communicating the hole and the load raceway circuit.

With the stud-type roller bearing with tracking roller constructed as stated earlier, the sealing member is made of elastic material only while the thrust washer fit in the bearing is expected to function as a backing plate to reinforce the sealing member in mechanical strength. This construction allows the sealing member to fit in a limited space to improve the sealing effect, thereby helping shrink the bearing down in size.

The roller bearing with tracking roller constructed as described above may get it much easier to fit effectively the thrust washers together with the sealing members in the limited spaces cut in the axially opposite ends of the outer ring, helping shrink the bearing itself down in size. The circular lips around the sealing members come into closing engagement with both the flange extending around the shaft and the cover plate fit around the shaft, ensuring the sealing effects at there. Moreover, the sealing member is made of elastic material only while the thrust washer expected to support the axial load double s as the backing plate for the sealing member. This construction helps shrink the sealing member down in size, ultimately contributing to shrinking the bearing itself.

Embodiments of the present invention will now be described by way of example only, with reference to the accompanying drawings, in which:-
FIG. 1 is a longitudinal section showing a preferred embodiment of a stud-type roller bearing with tracking roller in accordance with the present invention:
FIG. 2 is an axially sectioned view showing a sealing member for the stud-type roller bearing with tracking roller of FIG. 1:
FIG. 3 is an axially sectioned view showing a thrust washer for the stud-type roller bearing with tracking roller of FIG. 1:
FIG. 4 is a front elevation showing an end of a shaft, called a stud, for the stud-type roller bearing with tracking roller of FIG. 1:
FIG. 5 is a side elevation showing the shaft of FIG. 4:
FIG. 6 is an axially sectioned view showing an outer ring for the stud-type roller bearing with tracking roller of FIG. 1: and
FIG. 7 is an axially sectioned view showing a retainer or a cage for the stud-type roller bearing with tracking roller of FIG. 1.

A preferred embodiment of a stud-type roller bearing with tracking roller according to the present invention will be explained hereinafter in detail with reference to the accompanying drawings. The stud-type roller bearing with tracking roller can be well applied to a wide variety of machines including, for example, semiconductor manufacturing equipment, conveying machines, and so on to have parts, works and the like moved with high speed in a sliding manner, even with less damage and long-lasting service life.

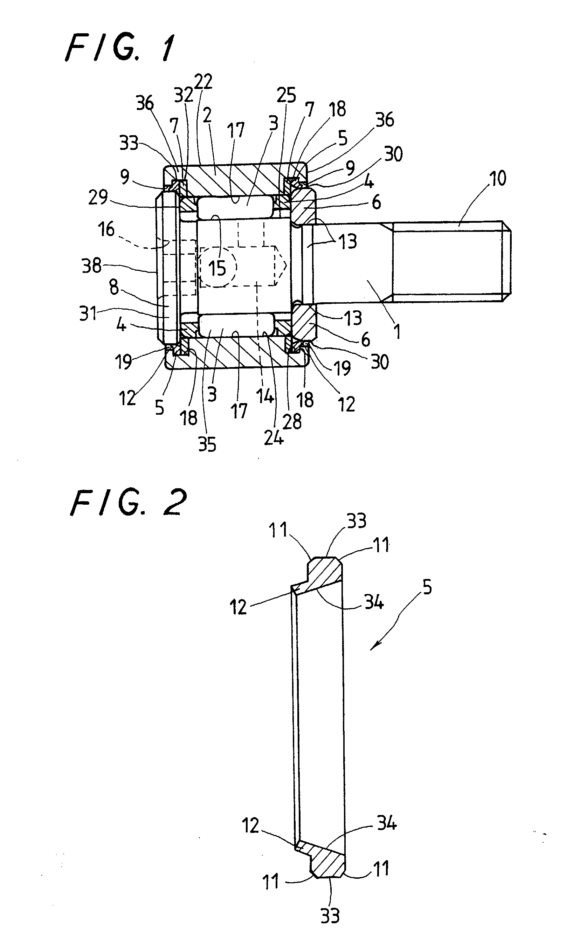

The stud-type roller bearing with tracking roller of the present invention, as shown in FIG. 1, is mainly comprised of a circular outer ring 2 having a first circular raceway surface 17 over an inside surface 24 thereof, a shaft 1, or a stud, fit in the outer ring 2 for rotation, the shaft 1 being made at any one of forward and aft ends thereof with a flange 8 while at the other end with an external thread 10, and provided around an outside surface 25 thereof with a second circular raceway surface 15 confronting the first raceway surface 17 inside the circular outer ring 2, and more than one roller 3 disposed in a load raceway circuit 35 defined between the first raceway surface 17 inside the circular outer ring 2 and the second raceway surface 15 around the outside surface 25 of the shaft 1 to roll through the load raceway circuit 35. The stud-type roller bearing with tracking roller will be fastened to any machine bed, base, frame, and so on for various instruments by mating the male threads around the shaft 1 with female threads inside a nut or any base such as the machine bed and the like.

With the stud-type roller bearing with tracking roller of the present invention, especially, the outer ring 2 is made at axially opposite ends thereof with circular setbacks 9 larger in their inside diameters than the first circular raceway surface 17. Any one of the setbacks 9 is arranged in opposition to the flange 8 of the shaft 1 while the other is placed in opposition relation to a cover plate 6 that fits on the shaft 1 at a location adjacent to the second raceway surface 15 around the shaft 1. The setbacks 9 are each made circumferentially with a circular recess 18 to fit therein a laminate of a thrust washer 7 and an elastic sealing member 5 joined together with the thrust washer 7. In FIG. 1, the laminate of the thrust washer 7 with the elastic sealing member 5 is shown as being fit in the associated circular recess 18 with their circular peripheries 32, 33 coming into engagement with a bottom 28 of the recess 18.

The stud-type roller bearing with tracking roller, as shown in FIG. 1, is such type into which the thrust washer 7 is built to support or carry an excessive axial load that might be sometimes applied to the outer ring 2 at axially opposite ends of the roller 3. To this end, the thrust washer 7 together with the sealing member 5 fits in the circular recess 18 cut in any one of the setbacks 9 at axially opposite sides 36 of the outer ring 2. The prior stud-type roller bearing with tracking roller has been constructed to fit only either the thrust washers or the sealing members in the circular recesses 18 cut in the setbacks 9 of the axially opposite sides 36 of the outer ring 2. In contrast, the present invention provides the stud-type roller bearing with tracking roller, in which the thrust washer 7 together with the sealing member 5 fits in the circular recess 18 cut in the setbacks 9.

With the stud-type roller bearing with tracking roller of the present invention, therefore, the sealing member 5 has no backing plate while the thrust washer 7 doubles as the backing plate. This will contribute to making the sealing member 5 less in dimension, providing the sealing member 5 able to fit in the bearing with ensuring good sealing effect, thus helping shrink the stud-type roller bearing with tracking roller down in size, even with serving sufficient sealing function.

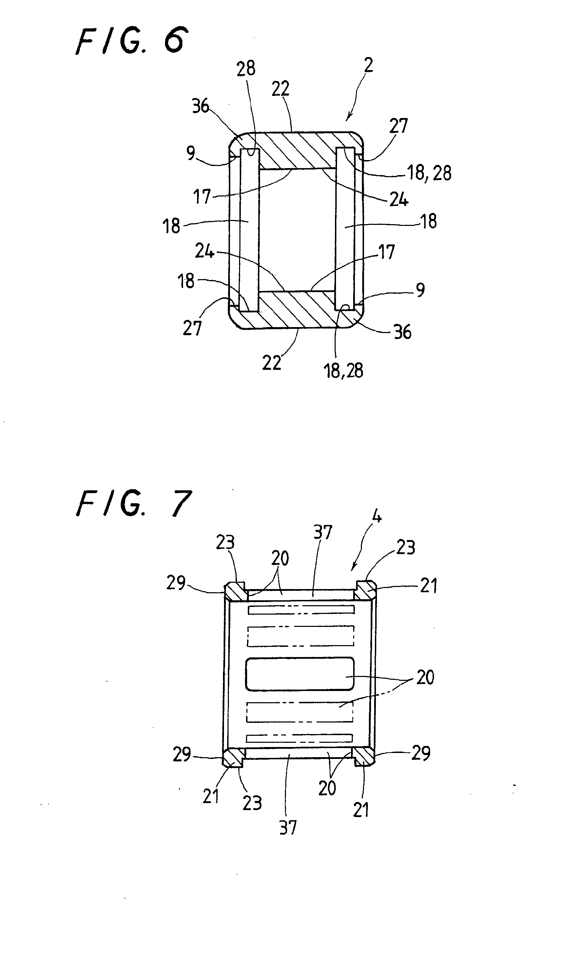

With the stud-type roller bearing with tracking roller of the present invention, moreover, the outer ring 2, even if made comparatively thin in radial thickness, can ensure a desired radial thickness extending between a periphery 22 of the outer ring 2 and the bottoms 28 of the recesses 18 cut in the axially opposite sides 36 in the outer ring 2. This makes it possible to make the outer ring 2 in itself slim or compact in construction. The shaft 1, as stated earlier and illustrated in FIGS. 1, 4 and 5, is provided at any one of forward and aft ends thereof with the flange 8 integral with the shaft end. Moreover, the outer ring 2, as shown in FIGS. 1 and 6, is made on a circular inside 24 thereof with the circular raceway surface 17 that is partially cut away at the axially opposite sides to form the setbacks 9 in which the circular recesses 18 are cut, one to each setback.

With the stud-type roller bearing with tracking roller constructed as stated earlier, the cover plate 6 fits securely in a circular groove 13 around the shaft 1, which is cut at a location next to the second raceway surface 15 on the shaft 1. The rollers 3 are held securely, snugly in pockets 20 of a retainer 4, one to each pocket. The retainer 4 is composed of axially spaced circular sides 21, and cage bars 37 connected integrally with the circular sides 21 at their axially opposite ends, with being positioned at regular intervals around a curved surface of the retainer 4 to define the pockets 20 that are spaced circumferentially at regular intervals around the retainer 4. Each roller 3 fits in each pocket 20 defined between any two adjacent cage bars 37 that provide guiding edges to encourage smooth rolling of the roller 3.

The circular sealing member 5, as seen from FIG. 2, is formed to have a radially inside periphery 34 slanting towards the axial center of the sealing member 5 and an circular lip 12 extending axially out of a circular side of the sealing member 5 in a direction heading radially inwards. The sealing member 5, moreover, has an outside periphery 33 that is chamfered along axially circular edges 11 thereof to render the sealing member 5 easier to fit in the recess 18 cut in the outer ring 2. The sealing member 5 is made of an elastic synthetic resin that can produce any member with high accuracy, even very small structure. After the sealing members 5 have fit in the stud-type roller bearing with tracking roller, as shown in FIG. 1, one of the sealing members 5 comes into abutment against an outside periphery 31 of the flange 8 at the circular lip 12 thereof, which extends radially inwards out of the sealing member 5, thereby closing a circular clearance 19 left between the outside periphery 31 of the flange 8 and a circular inside surface 27 in the associated setback 9 of the outer ring 2, while the other sealing member 5 comes into abutment against an outside periphery 30 of the cover plate 6 at the circular lip 12 thereof, which extends radially inwards out of the sealing member 5, thereby closing a circular clearance 19 left between the outside periphery 30 of the cover plate 6 and a circular inside surface 27 in the associated setback 9 of the outer ring 2.

The thrust washer 7, as shown in FIG. 3, is made in an annular disc of rectangular shape viewed in cross section, and fit in the circular recess 18 with being situated nearer to the raceway surface 17 than the sealing member 5. The thrust washer 7 also has a circular inside surface 26 made so as not to come into any engagement with a circular outside rim 23 of the associated one of the axially opposite circular sides 21 of the retainer 4. The thrust washer 7 is made of wear-resisting synthetic resin that would be less subjected to wear even if coming into sliding engagement with any metals. The thrust washer 7 is made of any thermoplastic synthetic resin, for example polyether ether ketone and so on much subject to elastic deformation, which is rich in wear-resisting property as well as in mechanical strength, and also less subjected to deformation even under high temperature. The thermoplastic resin is formed into a circular disc of rectangle viewed in cross section. On the other hand, the sealing member is made of elastically deformable synthetic resin including polypropylene and so on.

With the stud-type roller bearing with tracking roller of the present invention, thus, the thrust washer 7 together with the sealing member 5 can fit in the circular recess 18 in the outer ring 2 in accordance with the procedures in the following description. The thrust washer 7, as being made in the circular disc of rectangular shape in cross section, is deformed elastically then, followed by getting across easily the setback 9 in the outer ring 2 to fit in the circular recess 18 cut in the outer ring 2. On the other hand, the sealing member 5 is chamfered along the circular outside edges 11 opposite axially to one another to make certain of smooth fit of the sealing member 5 in the circular recess 18 cut in the outer ring 2. Thus, the sealing member 5, after deformed elastically to the extent enough to get across the setback 9 in the outer ring 2, can easily fit in the circular recess 18 easily across the setback 9 in the outer ring 2.

The stud-type roller bearing with tracking roller constructed as stated earlier allows the outer ring 2 to be made as radially thin as possible, providing there is reserved a desired thickness between the circular periphery 22 of the outer ring 2 and the bottom 28 of the circular recess 18. The flange 8 integral with lengthwise one end of the shaft 1 comes into face-to-face engagement with one circular side 21 of the retainer 4, while the cover plate 6 held in the circular groove 13 around the shaft 1 comes into engagement with the other circular side 21 of the retainer 4. As a result, the retainer 4 is held in place between the flange 8 and the cover plate 6. The flange 8 of the shaft 1 is made on an end face 38 thereof with a hole 16 that fits on any fastening bolt, and also an oiling passage 14 communicating the hole 16 and the load raceway circuit 35.

As the present invention may be embodied in several forms without departing from the spirit of essential characteristics thereof, the present embodiments are therefore illustrative and not restrictive, since the scope of the invention is defined by the appended claims rather than by the description preceding them, and all changes that fall within meets and bounds are therefore intended to embraced by the claims.

## Claims

1. A stud-type roller bearing with tracking roller; a circular outer ring(2) having a first circular raceway surface(17) over an inside surface(24) thereof, a shaft(1) fit in the outer ring(2) for rotation, the shaft(1) being made at any one of forward and aft ends thereof with a flange(8) while at the other end with a thread(10), and provided around an outside surface(25) thereof with a second circular raceway surface(15) confronting the first raceway surface(17), and more than one roller(3) disposed between the first raceway surface(17) and the second raceway surface(15) to roll through a load raceway circuit;
wherein the outer ring(2) is made at axially opposite ends thereof with circular setbacks(9), one to each end, which are larger in their inside diameters than the first circular raceway surface(17), and any one of the setbacks(9) is arranged in opposition to the flange(8) of the shaft(1) while the other is placed in opposition relation to a cover plate(6) that fits on the shaft(1) at a location adjacent to the second raceway surface(15) around the shaft(1); and
wherein the setbacks(9) are each made with a circular recess(18) where a laminate of a thrust washer (7) and an elastic sealing member(5) joined together with the thrust washer(7) fits therein.

2. A stud-type roller bearing with tracking roller constructed as defined in claim 1, wherein the cover plate(6) fits in a circular groove(13) around the shaft (1), which is cut at a location next to the second raceway surface(15) on the shaft(1).

3. A stud-type roller bearing with tracking roller constructed as defined in any one of claims 1 or 2,
wherein the roller(3) is held in a retainer(4) having more than one pocket(20) that are spaced circumferentially at regular intervals around the retainer(4).

4. A stud-type roller bearing with tracking roller constructed as defined in any one of claims 1 to 3,
wherein the thrust washer(7) fits in the circular recess(18) with being situated nearer to the first raceway surface(17) than the sealing member(5) in such a way that a circular inside surface(26) of the thrust washer(7) is in opposition to a circular periphery of the retainer(4).

5. A stud-type roller bearing with tracking roller constructed as defined in any one of claims 1 to 4,
wherein one of the axially opposite sealing members(5) has a circular lip(12) extending radially inwards out of the sealing member(5) into abutment against a circular periphery(31) of the flange(8), thereby closing a circular clearance(19) left between the circular periphery(31) of the flange(8) and a circular inside surface(27) in the associated setback(9), while the other sealing member(5) has a circular lip(12) extending radially inwards out of the sealing member(5) into abutment against a circular periphery(30) of the cover plate(6), thereby closing a circular clearance (19) left between the circular periphery(30) of the cover plate(6) and a circular inside surface(27) in the associated setback(9).

6. A stud-type roller bearing with tracking roller constructed as defined in any one of claims 1 to 5,
wherein the thrust washer(7) is made of a thermoplastic synthetic resin including polyether ether ketone and so on much subject to elastic deformation, which is rich in wear-resisting property as well as in mechanical strength, and also less subjected to deformation, and
wherein the thrust washer(7) is formed into a circular disc of rectangle in cross section.

7. A stud-type roller bearing with tracking roller constructed as defined in any one of claims 1 to 6,
wherein the sealing member(5) is made of elastically deformable synthetic resin including polypropylene and so on.

8. A stud-type roller bearing with tracking roller constructed as defined in any one of claims 1 to 7,
wherein the outer ring(2) is made as radially thin as possible, providing there is reserved a desired thickness between the circular periphery(22) of the outer ring(2) and the bottom(28) of the circular recess(18).

9. A stud-type roller bearing with tracking roller constructed as defined in any one of claims 1 to 8,
wherein the sealing member(5) has an outside periphery that is chamfered along axially circular edges(11) thereof to render the sealing member(5) easier to fit in the recess(18) cut in the outer ring(2).

10. A stud-type roller bearing with tracking roller constructed as defined in any one of claims 1 to 9, wherein the flange(8) integral with lengthwise one end of the shaft(1) comes into engagement with one circular side(21) of the retainer(4), while the cover plate(6) held in the circular groove around the shaft (1) comes into engagement with the other circular side (21) of the retainer(4), so that the retainer(4) is held in place between the flange(8) and the cover plate(6).

11. A stud-type roller bearing with a tracking roller constructed as defined in any one of claims 1 to 10, wherein the flange(8) of the shaft(1) is made on an end face(38) thereof with a hole(16) that fits on any fastening bolt, and also an oiling passage(14) communicating the hole(16) and the load raceway circuit(35).
